# EUROPÄISCHE PATENTSCHRIFT

(11) **EP 1 775 687 B1**
(45) Veröffentlichungstag und Bekanntmachung des Hinweises auf die Patenterteilung: **14.11.2012**
(21) Anmeldenummer: 06120545.6
(22) Anmeldetag: 13.09.2006
(51) Int. Cl.: G08B 17/10, H04M 11/04, G08B 29/14

(54) **Rauchmeldeanlage**
Smoke alarm system
Système de détection de fumée

(30) Priorität: 13.10.2005 DE 102005049490
(43) Veröffentlichungstag der Anmeldung: 18.04.2007
(73) Patentinhaber: Merten GmbH, 51674 Wiehl (DE)
(72) Erfinder: Schlicker, Michael, 51580 Reichshof/Denklingen (DE); Steffen, Manfred, 49324 Melle (DE)

(56) Entgegenhaltungen:
- WO-A1-99/44181
- JP-A- 5 346 995
- US-A- 5 686 885
- US-A1- 2004 217 857

## Beschreibung

Die Erfindung betrifft eine Rauchmeldeanlage mit mindestens einem Rauchmelder, der einen akustischen Signalerzeuger aufweist.

Rauchmelder werden üblicherweise unter der Decke eines Raumes montiert und enthalten eine Einrichtung, die auf das Vorhandensein von Rauchpartikeln in der Luft anspricht. Im Falle der Anwesenheit von Rauch wird ein akustisches Signal erzeugt. Die üblichen Rauchmelder haben häufig eine eigene elektrische Batterie oder eine Akkumulatorgepufferte Netzversorgung, so dass sie von der Stromversorgung des Gebäudes unabhängig sind.

DE 299 19 926 U1 beschreibt einen elektronischen Rauchmelder mit einem Funksender zur drahtlosen Übertragung eines Alarmsignals an einen entfernt angeordneten Empfänger. DE 90 00 457 U1 beschreibt ein Signalgerät, welches auf eine Telefonklingel reagiert. Das Signalgerät enthält ein Mikrofon, welches das Klingeln des Telefongeräts wahrnimmt und dieses gewissermaßen verstärkt.

Aus DE 10 2004 008 932 A1 ist ein Rauchmelder bekannt, der einen drahtlosen Sender enthält und an entfernt angeordnete Empfangsgeräte einen Alarmzustand signalisiert. Diese Empfangsgeräte können ein Sprachmodul aufweisen, welches den Ort der Alarmauslösung durch Spracherzeugung verkündet.

Rauchmelder müssen regelmäßig einer Funktionsprüfung unterzogen werden. DE 43 33 911 C2 beschreibt die periodische Einschaltung eines Testzustandes bei einem Rauchmelder. In dem Testzustand wird die Lichtleistung des Lichtsenders erhöht, um zu prüfen, ob der Rauchmelder die erforderliche Empfindlichkeit hat und ob sich die Verschmutzung noch in tolerierbaren Grenzen hält. Auch DE 695 18 019 T2 beschreibt eine Funktionsprüfung von fotoelektrischen Rauchmeldern, bei der die Empfindlichkeit des Detektors verändert wird. Bisher war diese automatische Überprüfung nur auf die Rauchkammern beschränkt. Die Überprüfung insbesondere des Alarmgebers sowie der Belastungsstand der Batterien müssten manuell ausgelöst werden. Dabei bestand/besteht die Gefahr, dass die Anwender dieses häufig vergessen.

Aus JP 0 5346995 ist ein leitungsgebundenes System mit Feuersensoren bekannt, wobei an zentralen Stelle eine Signalsierung und eine Fernabfrage erfolgt.

Der vorliegenden Erfindung liegt die Aufgabe zugrunde, eine Rauchmeldeanlage anzugeben, bei der mit einfachen Mitteln die Funktionsfähigkeit eines oder mehrerer Rauchmelder von außerhalb einer Wohneinheit insbesondere in Mietwohnungen, überprüfbar ist.

Die erfindungsgemäße Rauchmeldeanlage ist durch den Anspruch 1 definiert. Sie weist ein externes Abfragegerät auf, dass entfernt von dem mindestens einen Rauchmelder angeordnet ist. Der Rauchmelder enthält einen Sende-Empfänger, der mit dem Abfragegerät kommuniziert. Das Abfragegerät ist im Stande, den akustischen Signalerzeuger des Rauchmelders auszulösen, beispielsweise durch Simulation eines Signals, das in ähnlicher Form bei Rauchentwicklung auftritt. Der akustische Signalerzeuger erzeugt bei ordnungsgemäßer Funktion des Rauchmelders ein Alarmsignal, das entweder außerhalb der Wohneinheit gehört oder quittiert wird, oder vorzugsweise an den Sende-Empfänger geliefert wird, der es seinerseits an das Abfragegerät überträgt. Die Rauchmeldeanlage bildet mit dem Abfragegerät dann ein geschlossenes System, das einerseits den Abfragefall initiiert und durchführt und andererseits auch die Alarmerzeugung überwacht und an das Abfragegerät rückmeldet. Auf diese Weise ist eine komplette Funktionsüberwachung des Rauchmelders möglich, einschließlich der Prüfung des Ladereststands der Batterie. Bei Netzversorgung umfasst die Funktionsprüfung eine Prüfung auf ausreichende Höhe der Netzspannung und Verschmutzungsgrad der Detektionskammer. Der akustische Signalerzeuger wird ebenfalls auf seine Funktionsfähigkeit überprüft. Im Falle der Funktionsunfähigkeit irgendeines Teils des Rauchmelders wird kein akustisches Alarmsignal erzeugt und rückgemeldet, so dass auf einen Störungsfall geschlossen werden kann. In diesem Rahmen kann auch die Stärke des erzeugten akustischen Signals ermittelt und überwacht werden, so dass im Falle eines zu schwachen akustischen Signals ein Fehlerzustand erkannt wird.

Das Nichtvorhandensein einer Batterie oder der Ausfall der Funkübertragung wird als Fehler dargestellt. In diesem Falle müsste der Rauchmelder auf den Ausfallgrund untersucht werden.

Die Rauchmeldeanlage eignet sich insbesondere für Rauchmeldesysteme in Gebäuden, die zahlreiche Einheiten enthalten, beispielsweise Mietwohnungen oder Hotelzimmer. Mit dem Abfragegerät kann eine Überwachungsperson sich in die Nähe der einzelnen Wohnungen oder Zimmer begeben, in denen ein Rauchmelder angeordnet ist, ohne das Zimmer bzw. die Wohnung betreten zu müssen. Durch Funkübertragung ist die komplette Funktionsüberwachung möglich. Dies erlaubt es, zahlreiche Rauchmelder mit einem einzigen Abfragegerät auf ihre Funktion zu überprüfen.

Über das in den Rauchmelder implementierte Funkinterface lassen sich die gesetzlich vorgeschriebenen Funktionstests im Rauchmelder auslösen und deren Ergebnisse übermitteln, ohne dass ein unmittelbarer Zugang zu dem Rauchmelder besteht. Darüber hinaus besteht mit diesem Funkinterface die Möglichkeit, den Ladungsstand der Batterie zu überprüfen und eine Prognose über die restliche Lebensdauer der Batterie zu treffen. Diese Eigenschaften gestatten den Nachweis, dass die Rauchmelder funktionsfähig sind - ohne dass die Wohnung betreten werden muss. Dies ist insbesondere für Wohnungsbaugesellschaften von großem Interesse, da diese für den technisch einwandfreien Zustand der Rauchmelder verantwortlich sind, andererseits erheblich Probleme haben, alle Wohnungen regelmäßig begehen zu können.

Um eine Identifizierung der überprüften Rauchmelder vornehmen zu können, weist der Sende-Empfänger des Rauchmelders eine unverwechselbare Kennung auf. Er ist nur ansprechbar, wenn das Abfragegerät diese Kennung sendet. Auf diese Weise können einzelne Rauchmelder bzw. ihre Sende-Empfänger nacheinander zur Funktionsprüfung aufgerufen werden. Jeder Rauchmelder meldet dann das Ergebnis seiner Funktionsprüfung an das Abfragegerät.

Vorzugsweise umfasst das Signalisieren des Auslösens des Alarmfalls auch eine Information über die Stärke des von dem Signalerzeuger erzeugten akustischen Signals. Dieses akustische Signal kann beispielsweise mit einem im Rauchmelder installierten Mikrofon aufgenommen werden.

Die Aktivierung des Alarmfalls wird vorzugsweise dann von dem Abfragegerät beendet, wenn dieses ein Signal über das Auslösen des Alarmfalls im Rauchmelder empfangen hat. Andererseits kann die Aktivierung des Alarmfalls auf eine vorbestimmte Zeit beschränkt sein. Diese Zeit kann entweder im Rauchmelder festgelegt sein oder im Abfragegerät.

Gemäß einer bevorzugten Ausgestaltung der Erfindung ist das Abfragegerät mit einem Computer verbunden, der eine Dokumentation der Abfrage mit Angabe der Zeit und des Abfrageergebnisses erstellt und speichert. Auf diese Weise ist es möglich, die regelmäßig durchzuführende Funktionsprüfung von Rauchmeldern zu dokumentieren und nachzuweisen.

Eine weitere Möglichkeit der Identifizierung eines Rauchmelders besteht darin, dass der Sende-Empfänger eine begrenzte Reichweite hat, wobei ein Rauchmelder dadurch identifizierbar ist, dass das Abfragegerät in seiner räumlichen Nähe positioniert wird. Wie bei dieser Variante der Erfindung, bringt die Bedienungsperson das Abfragegerät beispielsweise vor die Wohnungstür einer Wohnung, in der der Rauchmelder einer Funktionsprüfung unterzogen werden soll. Das Abfragegerät kommuniziert durch die Wohnungstür hindurch mit dem Rauchmelder und führt die Funktionsprüfung durch. Weiter entfernt angeordnete Rauchmelder werden von dem Abfragegerät nicht erreicht.

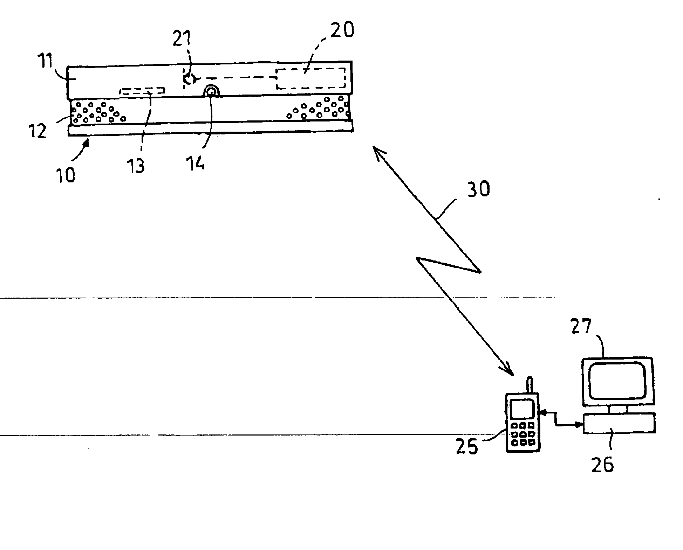

Im Folgenden wird unter Bezugnahme auf die Zeichnung ein Ausführungsbeispiel der Erfindung näher erläutert.

Die Zeichnung zeigt eine schematische Darstellung eines Rauchmelders mit akustischem Signalerzeuger und einem per Funk mit dem Rauchmelder kommunizierenden Abfragegerät.

In der Zeichnung ist ein Rauchmelder 10 dargestellt, der beispielsweise unter der Decke eines Raumes montiert werden kann. Der Rauchmelder 10 enthält ein im wesentlichen rotationssymetrisches Gehäuse 11 mit einem für Rauch durchlässigen Gitter 12, hinter dem sich eine Messkammer befindet. Die Messkammer enthält eine Lichtquelle, die einen gebündelten Lichtstrahl aussendet. Wenn Rauchpartikel in der Messkammer enthalten sind, wird das Licht der Lichtquelle von den Rauchpartikeln gestreut. Das Streulicht wird von einem Lichtempfänger detektiert und in ein elektrisches Signal umgewandelt.

Dieses Signal erregt einen akustischen Signalerzeuger 13, bei dem es sich beispielsweise um eine Scheibe aus einem piezoelektrischen Kristall handelt. Diese Scheibe wird zu Schwingungen angeregt, die als akustisches Alarmsignal abgestrahlt werden.

Das Gehäuse 11 des Rauchmelders 10 weist einen üblichen Auslöseknopf 14 auf, der gedrückt werden kann, um am Ort die Funktionsfähigkeit des Signalerzeugers zu prüfen. Außerdem enthält der Rauchmelder eine Leuchte, die im Auslösefall blinkt, um den Rauchmelder, der angesprochen hat, auch optisch erkennbar zu machen.

Erfindungsgemäß enthält der Rauchmelder innerhalb des Gehäuses 11 einen Sende-Empfänger 20, der Funksignale mit einem Abfragegerät 25 austauschen kann. Das Abfragegerät 25 ist ebenfalls ein Sende-Empfänger, also ein Funkgerät, das sowohl senden als auch empfangen kann. Das Abfragegerät 25 kommuniziert mit einem Computer 26, in dem die Abfrage und ihre Ergebnisse gespeichert werden. Der Computer 26 ist u. a. mit einem Bildschirm 27 versehen.

Der im Gehäuse 11 des Rauchmelders enthaltene Sende-Empfänger 20 kommuniziert per Funk bidirektional mit dem Abfragegerät 25, was durch den Doppelpfeil 30 angedeutet ist. Das Abfragegerät 25 sendet ein Abfragesignal an den Sendeempfänger 20. Dieser bewirkt das Auslösen des Alarmfalls und erzeugt ein Betätigungssignal für den akustischen Signalerzeuger 13 und ggf. einen zusätzlichen optischen Alarmerzeuger oder weitere Alarmerzeuger. Der Alarmerzeuger 13 wird dadurch in Funktion gesetzt, so dass er das Alarmgeräusch erzeugt. Das Alarmgeräusch wird von einem in oder an dem Gehäuse 11 angeordneten Mikrofon 21 aufgenommen. Das Mikrofon 21 liefert an den Sende-Empfänger 20 ein Signal, das sowohl die Existenz des Alarmgeräusches als auch dessen Amplitude angibt. Der Sende-Empfänger 20 sendet per Funk ein entsprechendes Bestätigungssignal, das diese Informationen enthält, an das Abfragegerät 25. Alternativ kann die Bestätigung auch manuell durch den Prüfer gesetzt werden, für den Fall, dass in dem Rauchmelder kein Mikrofon installiert ist.

Die Initiierung der Abfrage kann durch den Computer 26 oder durch das Abfragegerät 25 entweder unter manueller Steuerung oder automatisch erfolgen.

Das Abfragesignal, das von dem Abfragegerät 25 an den Sende-Empfänger 20 geschickt wird, enthält vorzugsweise eine unverwechselbare Kennung des betreffenden Rauchmelders 10. Jedem der Rauchmelder Rauchmeldeanlage ist eine eigene unverwechselbare Kennung zugeteilt. Das Abfragegerät 25 kann also einen von zahlreichen Rauchmeldern selektiv aufrufen und auf seine Funktionsfähigkeit hin überprüfen. In dem Computer 26 wird ein Protokoll erstellt, das für jeden Rauchmelder die Kennung und die Durchführung der Funktionsabfrage sowie das Datum und ggf. eine Identifizierung der betreffenden Bedienungsperson protokolliert. Auf diese Weise können von einem zentralen Abfragegerät 25 zahlreiche verteilt angeordnete Rauchmelder 10 einer Rauchmeldeanlage geprüft werden. Die Prüfung kann in regelmäßigen Abständen automatisch durchgeführt werden oder unter manueller Steuerung.

Abweichend hiervon besteht die Möglichkeit, das Abfragegerät 25 als tragbares Gerät auszubilden, das in die Nähe jedes einzelnen Rauchmelders gebracht wird und über Funk mit dem Rauchmelder kommuniziert. Das Abfragegerät 25 ist dann mit dem Computer 26 entweder über eine Drahtleitung oder drahtlos verbunden.

## Patentansprüche

1. Rauchmeldeanlage mit mindestens einem Rauchmelder (10), der einen akustischen Signalerzeuger (13) aufweist,
**dadurch gekennzeichnet, dass**
die Rauchmeldeanlage ein externes Abfragegerät (25) enthält, mit Mittel um mit einem Sende-Empfänger (20) des Rauchmelders (10) per Funkübertragung zu kommunizieren, dass ein den Signalerzeuger (13) aktivierender Alarmfall durch das Abfragegerät (25) auslösbar ist und dass ein das Auslösen des Alarmfalls angebendes Betätigungssignal von dem Sende-Empfänger (20) automatisch an das Abfragegerät (25) übertragen wird.

2. Rauchmeldeanlage nach Anspruch 1, **dadurch gekennzeichnet, dass** der Sende-Empfänger (20) des Rauchmelders (10) eine unverwechselbare Kennung aufweist und nur ansprechbär ist, wenn das AbfragegeTäf (25) diese Kennung sendet.

3. Rauchmeldeanlage nach Anspruch 1 oder 2, **dadurch gekennzeichnet, dass** außer dem Bestätigungssignal eine Information über die Stärke des von dem Signalerzeuger (13) erzeugten akustischen Signals zum Abfragegerät (25) übertragen wird.

4. Rauchmeldeanlage nach einem der Ansprüche 1 - 3, **dadurch gekennzeichnet, dass** die Aktivierung des Alarmfalls auf eine vorbestimmte Zeitdauer beschränkt ist.

5. Rauchmeldeanlage nach den Ansprüchen 1 - 3, **dadurch gekennzeichnet, dass** die Aktivierung des Alarmfalles am Abfragegerät gehört wird und manuell am Abfragegerät bestätigt wird.

6. Rauchmeldeanlage nach einem der Ansprüche 1 - 5, **dadurch gekennzeichnet, dass** die Aktivierung des Alarmfalls von dem Abfragegerät (25) beendet wird, wenn dieses das Bestätigungssignal empfangen hat.

7. Rauchmeldeanlage nach einem der Ansprüche 1 - 6, **dadurch gekennzeichnet, dass** das Abfragegerät (25) mit einem Computer (26) verbunden ist, der eine Dokumentation der Abfrage mit Angabe der Zeit und des Abfrageergebnisses erstellt und speichert.

8. Rauchmeldeanlage nach einem der Ansprüche 1 - 4, 6, 7, **dadurch gekennzeichnet, dass** der Rauchmelder (10) mit einem Mikrofon (21) versehen ist, welches das akustische Signal des Alarmerzeugers (13) aufnimmt und zur Erzeugung des Bestätigungssignals an den Sende-Empfänger (20) liefert.

9. Rauchmeldeanlage nach einem der Ansprüche 1 - 4, 6, 7, **dadurch gekennzeichnet, dass** der Signalerzeuger (13) eine Membran aufweist, die durch ein Anregungssignal in Schwingungen versetzt wird und dass ein dem Anregungssignal entsprechendes Signal zur Erzeugung des Bestätigungssignals dem Sende-Empfänger zugeführt wird.

## Claims

1. Smoke alarm system having at least one smoke alarm (10) which has an acoustic signal generator (13), **characterized in that**
the smoke alarm system contains an external interrogator (25) having means for communicating with a transceiver (20) of the smoke alarm (10) by radio transmission, **in that** an alarm situation which activates the signal generator (13) can be triggered by the interrogator (25), and **in that** a confirmation signal which indicates the triggering of the alarm situation is automatically transmitted from the transceiver (20) to the interrogator (25).

2. Smoke alarm system according to Claim 1, **characterized in that** the transceiver (20) of the smoke alarm (10) has a unique identifier and can be addressed only when the interrogator (25) transmits this identifier.

3. Smoke alarm system according to Claim 1 or 2, **characterized in that**, apart from the confirmation signal, an item of information relating to the strength of the acoustic signal generated by the signal generator (13) is transmitted to the interrogator (25).

4. Smoke alarm system according to one of Claims 1-3, **characterized in that** the activation of the alarm situation is restricted to a predetermined period of time.

5. Smoke alarm system according to Claims 1-3, **characterized in that** the activation of the alarm situation is heard at the interrogator and is manually confirmed on the interrogator.

6. Smoke alarm system according to one of Claims 1-5, **characterized in that** the activation of the alarm situation is terminated by the interrogator (25) when the latter has received the confirmation signal.

7. Smoke alarm system according to one of Claims 1-6, **characterized in that** the interrogator (25) is connected to a computer (26) which creates and stores documentation relating to the interrogation with a statement of the time and the interrogation result.

8. Smoke alarm system according to one of Claims 1-4, 6, 7, **characterized in that** the smoke alarm (10) is provided with a microphone (21) which picks up the acoustic signal from the alarm generator (13) and delivers it to the transceiver (20) in order to generate the confirmation signal.

9. Smoke alarm system according to one of Claims 1-4, 6, 7, **characterized in that** the signal generator (13) has a diaphragm which is caused to vibrate by an excitation signal, and **in that** a signal corresponding to the excitation signal is supplied to the transceiver in order to generate the confirmation signal.

## Revendications

1. Installation de détection de fumées comprenant au moins un détecteur de fumée (10) qui présente un générateur de signal sonore (13), **caractérisée en ce que** l'installation de détection de fumée contient un appareil d'interrogation (25) externe comprenant des moyens pour communiquer par transmission radioélectrique avec un émetteur/récepteur (20) du détecteur de fumée (10), **en ce qu'**une situation d'alarme activant le générateur de signal (13) peut être déclenchée par l'appareil d'interrogation (25) et **en ce qu'**un signal de confirmation indiquant le déclenchement de la situation d'alarme est transmis automatiquement de l'émetteur/récepteur (20) à l'appareil d'interrogation (25).

2. Installation de détection de fumée selon la revendication 1, **caractérisée en ce que** l'émetteur/récepteur (20) du détecteur de fumée (10) présente un identifiant unique et ne peut être interrogé que lorsque l'appareil d'interrogation (25) émet cet identifiant.

3. Installation de détection de fumée selon la revendication 1 ou 2, **caractérisée en ce qu'**une information sur l'intensité du signal sonore généré par le générateur de signal sonore (13) est transmise à l'appareil d'interrogation (25) en plus du signal de confirmation.

4. Installation de détection de fumée selon l'une des revendications 1 à 3, **caractérisée en ce que** l'activation de la situation d'alarme est limitée à une durée prédéfinie.

5. Installation de détection de fumée selon l'une des revendications 1 à 3, **caractérisée en ce que** l'activation de la situation d'alarme est entendue au niveau de l'appareil d'interrogation et confirmée manuellement sur l'appareil d'interrogation.

6. Installation de détection de fumée selon l'une des revendications 1 à 5, **caractérisée en ce que** l'appareil d'interrogation (25) met fin à l'activation de la situation d'alarme lorsqu'il a reçu le signal de confirmation.

7. Installation de détection de fumée selon l'une des revendications 1 à 6, **caractérisée en ce que** l'appareil d'interrogation (25) est relié avec un ordinateur (26) qui établit et mémorise une documentation de l'interrogation avec indication du temps et du résultat de l'interrogation.

8. Installation de détection de fumée selon l'une des revendications 1 à 4, 6, 7, **caractérisée en ce que** le détecteur de fumée (10) est muni d'un microphone (21) qui enregistre le signal sonore du générateur d'alarme (13) et le délivre à l'émetteur/récepteur (20) en vue de générer le signal de confirmation.

9. Installation de détection de fumée selon l'une des revendications 1 à 4, 6, 7, **caractérisée en ce que** le générateur de signal (13) présente une membrane qui est mise en oscillation par un signal d'excitation et **en ce qu'**un signal correspondant au signal d'excitation est acheminé à l'émetteur/récepteur pour générer le signal de confirmation.
